# EUROPEAN PATENT APPLICATION

(11) **EP 2 603 033 A2**
(43) Date of publication of application: **12.06.2013**
(21) Application number: 13156861.0
(22) Date of filing: 23.06.2008
(51) Int. Cl.: H04W 28/06

(54) **Apparatus, method and computer program product providing distribution of segmented system information**

(30) Priority: 26.06.2007 US 937338 P
(62) Divisional of application: 08776456.9
(71) Applicant: Nokia Corporation, 02150 Espoo (FI)
(72) Inventor: Dalsgaard, Lars, 90230 Oulu (FI); Alanärä, Seppo, 90520 Oulu (FI); Koskela, Jarkko, 90500 Oulu (FI)
(74) Representative: Nokia Corporation

(57) **Abstract**

Multiple embodiments are detailed to enable segmenting of system information SI that is sent on a shared channel. In one embodiment, information indicative of a segmentation state of at least one message that comprises system information is generated, and the information indicative of the segmentation state is transmitted to a user equipment, where the information indicative of the segmentation state is provided in one of a L1/L2 control channel, in a broadcast channel, or in a radio resource control message header. Other embodiments stipulate one bit signaling, container types to carry the segmented SI, headers, segment lengths and other indicators. Certain embodiments specifically address how large block ETWS may be sent in E-UTRAN with low DL-SCH bandwidths.

## Description

### TECHNICAL FIELD

The exemplary and non-limiting embodiments of this invention relate generally to wireless communication systems, methods, devices and computer program products and, more specifically, relate to techniques to provide system information to user equipment.

### BACKGROUND:

Various abbreviations that appear in the specification and/or in the drawing figures are defined as follows:
- 3GPP: third generation partnership project
- UTRAN: universal terrestrial radio access network
- Node B: base station
- UE: user equipment
- EUTRAN: evolved UTRAN
- eNB: EUTRAN Node B (evolved Node B)
- PRB: physical resource block
- SN: sequence number
- RLC: radio link control
- RRC: radio resource control
- PDCP: packet data convergence protocol
- SDU: service data unit
- LTE: long term evolution
- CDM: code division multiplexing
- FDMA: frequency division multiple access
- OFDMA: orthogonal frequency division multiple access
- PS: packet scheduler
- SC-FDMA: single carrier, frequency division multiple access
- UL: uplink
- DL: downlink
- L1: layer 1 (physical)
- L2: layer 2 (RLC)
- SI: system information
- BCH: broadcast channel (BCCH)
- P-BCH: primary BCH
- PBCCH: packet BCCH
- MIB: master information block
- SIB: system information block
- SU: scheduling unit
- P2P: point-to-point
- P2M: point-to-multipoint
- PLMN: public land mobile network
- TTI: transmission time interval (=1ms in LTE)
- DL-SCH: downlink shared channel
- PDCCH: packet downlink control channel
- RNTI: radio network temporary identifier
- MCS: modulation and coding scheme

A proposed communication system known as evolved UTRAN (E-UTRAN, also referred to as UTRAN-LTE or as E-UTRA) is currently under discussion within the 3GPP. The current working assumption is that the DL access technique will be OFDMA, and the UL access technique will be SC-FDMA.

One specification of interest to these and other issues related to the invention is 3GPP TS 36.300, V8.0.0 (2007-03), 3rd Generation Partnership Project; Technical Specification Group Radio Access Network; Evolved Universal Terrestrial Radio Access (E-UTRA) and Evolved Universal Terrestrial Access Network (E-UTRAN); Overall description; Stage 2 (Release 8), which is attached as Exhibit Ato the priority document Provisional US Patent Application No.: 60/937,338. Also attached as Exhibit B to that priority document is 3GPP TSG-RAN2 Meeting #58, Kobe, Japan, 7-11 May 2007, Change Request 36.300 CR 0002, R2-072338.

The current understanding and agreement within 3GPP is that SI will be grouped into following entities: P-BCH, also referred to as the MIB, and SUs.

The P-BCH/MIB is fixed in content and will be transmitted on the center 1.25MHz BW of the cell. It will be repeated every 40ms (based on the current proposals) and will contain information needed by the UE for further reception and decoding of data (broadcast, P2P or P2M) in the cell, This information can include, for example, the cell BW.

For the SUs there will be at least a SU-1 and possibly also further SUs. SU-1 includes information needed by the UE for, as examples, basic mobility (such as neighbor cell information), PLMN information, etc. SU-1 is scheduled to be broadcast every 80 ms (based on current proposals).

In addition to SU-1 there may be additional SUs that are broadcast according to network defined scheduling information broadcast in SU-1.

In addition to the foregoing, the current understanding in 3GPP is that an SU-x (any SU message) may be segmented and if so, the segments are distributed in consecutive TTIs on the DL-SCH.

The inventors have realized that the foregoing current working assumption in 3GPP concerning the E-UTRAN system information distribution introduces problems for the UE. For example, the UE does not know if/when SU-1 is segmented (information concerning other SUs being segmented might be given in SU-1). Further, if SU-1 is segmented the UE does not know how many segments there are.

Another problem relates to the actual allocation of the possible segmented SUs. The current understanding is that the SU is allocated on the DL-SCH by the use of a distinct RNTI, e.g., B-RNTI or BCH-RNTI. The UE will search the PDCCH for the BCH-RNTI and obtain there from the actual details concerning how the BCH is scheduled on the DL-SCH, as is done for normal data scheduling (resources, MCS, etc). Thus far, the precise details of how this will be accomplished have yet to be defined.

In the conventional GSM wireless network the SI is distributed according to a more or less fixed scheduling plan given directly in the specification. The most important parts of the SI (SI2-SI4) are scheduled often (about once per second) and fixed in time and place. The GSM SI scheduling in defined 3GPP TS 45.002, V7.4.0 (2007-05), 3rd Generation Partnership Project; Technical Specification Group GSM/EDGE Radio Access Network; Multiplexing and multiple access on the radio path (Release 7), which is attached as Exhibit Cto the priority document Provisional US Patent Application No.: 60/937,338, specifically in sections 6.3.1.3 (BCCH) and 6.3.2.4 (PBCCH).

In general, UTRAN scheduling is more flexible, although some important SIBs are fixed in place. One example is the MIB which is scheduled every 80ms and contains further information on the scheduling of the rest of the SIBs in the cell.

Scheduling information (indicating starting times) is provided for a group of system information blocks (SIBs) that have the same scheduling requirements (periodicity). Such a group of SIBs is referred to as the SU. It is expected that typically three or four SUs will be used. The mapping of SIBs to SUs may be configurable or fixed in the final specification.

The following system information is carried on the BCH:
Physical layer parameters:
   Downlink system bandwidth [4b];
   Number of transmit antennas [1..2b];
   Reference-Signal transmit power [0..6b];
   System Frame Number (SFN [10b], unless provided otherwise); and
   Scheduling information of the most frequently repeated Scheduling Unit (SU-1)[1b]; Cell re-selection and handover related parameters:
      Offset [6b]; and
      Value tag(s).

The system information carried on the BCH is contained in a SIB referred to as the MIB.

All system information, other than that contained in the MIB, is carried on the DL-SCH. The following system information is carried within the most frequently repeated Scheduling Unit (SU-1):
One or more PLMN identities;
Tracking Area Code;
Cell identity;
Cell barring status;
Scheduling information i.e. the periodicity of the other Scheduling Units (other than SU-1); and SIB mapping information, i.e., an indication in which SU the SIB is included (this item is currently for future study).

The scheduling information, as contained within SU-1, is carried in a SIB referred to as the SB. In addition to SB, SU-1 includes one or more other SIBs. SU-1 should include all access restriction related parameters. SU-1 is carried on the DL-SCH and uses a fixed schedule with a periodicity of 80 ms.

It has not yet been determined whether the SB includes a value tag for each SU or whether a common value tag is used. The common value tag could either be carried in the MIB or in the SB.

An SU may be segmented, in which case segments are scheduled in subsequent consecutive subframes. SU-1 is scheduled in the subframe following the one carrying the BCH. It is for future study whether further SUs are scheduled in subsequent consecutive subframes. The eNB may schedule DL-SCH transmissions concerning logical channels other than BCCH in the same subframe as used for BCCH. The minimum UE capability restricts the BCCH mapped to DL-SCH, e.g., regarding the maximum rate. It is also for future study if the eNB may schedule more than one SU in a subframe.

Note that system information may also be provided to the UE by means of dedicated signaling, e.g., upon HO.

Another aspect of E-UTRAN detailed at 3GPP TS 22.168 v9.0.0 (2008-06) is an Earthquake and Tsunami Warning System ETWS in which the E-UTRAN network sends user equipments UEs in specific geographic areas, with high priority and little time delay, warning notifications of earthquakes, tsunamis and possibly other major disasters. Certain specifics of ETWS are not yet finalized.

ETWS is expected to be on the E-UTRAN broadcast control channel BCCH which broadcasts the system information SI. The SI carried on the BCH is contained in a system information block SIB referred to as the master information block MIB. All system information, other than that contained in the MIB is carried on the downlink shared channel DL-SCH. As detailed above with respect to the SUs, Such non-MIB information includes scheduling information that indicate starting times for a group of SIBs that have the same periodicity (e.g., 80ms). Recently the terminology for SUs have been dropped from E-UTRAN but the same meaning is now addressed with the term system information SI. As above the MIB is transmitted on the primary broadcast channel, and the SI messages are sent on the DL-SCH (physical downlink shared channel PDSCH) and scheduled through the physical downlink control channel (PDCCH).

Particularly for ETWS but also anticipated for other purposes, there is a need to transmit long system information blocks (SIBs) in the E-UTRAN SI broadcast. The SI message carrying the ETWS may result in a SI message size of up to 1200 bytes. This length would appear to exceed the capacity of the downlink shared channel DL-SCH subframe for BCCH and there seems to be an acute and clear need to account for this discrepancy. One possibility for addressing large SI blocks in the UTRAN (universal mobile telecommunications system terrestrial radio access network, or 3G) system is segmenting the SI as is summarized below. Segmenting at least SI containing the ETWS seems a viable option for E-UTRAN to enable the ETWS to be communicated to the UEs. In certain other scenarios especially with narrow bandwidth on the E-UTRAN broadcast channel, other types of SIBs could also benefit from segmenting.

At present the decisions in the radio access network group RAN2, including the most recent meeting (RAN2#62 May 2008 in Kansas City, USA), does not address this issue but has maintained the earlier decision of not segmenting the SIBs in E-UTRAN. It has been mentioned in RAN2 meetings that this is a problem with the narrow bandwidths (a small amount of physical resource blocks PRBs in a subframe), but the current solution appears limited to simply optimizing the SIB length for the low bandwidth scenarios.

Appendix A attached hereto reproduces table 5.1.1 from TS 36.104 v8.1.0, and shows the E-UTRA bandwidths and amounts of PRBs and bit count in one subframe. It is noted that the BCCH PRB usage maximum is 32 PRB's (it is given by a 5-bit indicator on the physical downlink control channel PDCCH, so 2⁵=32), thus the applicable bit counts for bandwidths of 10, 15 and 20 MHz are correspondingly smaller, but can be easily estimated from the table of Appendix A with linear interpolation. Additionally, only the quaternary phase shift keying QPSK modulation is planned for BCCH, and there are plans to use higher coding rates than the ten shown for QPSK in the table at Appendix A. It is impossible to transmit 1200 bits in one subframe on BCCH with QPSK at the lowest bandwidth seen at Appendix A without higher coding rates (with less redundancy). It appears since the earlier RAN2 decision to not segment the SIB is continued, then the plan for how to send the ETWS warnings will rely on those yet to be implemented higher coding rates.

As noted above, the UTRAN (wireless code division multiple access WCDMA) system does provide that system information may be sent in segmented form. There the solution has been to have a radio resource control RRC header structure for system information, which enables SI transmission in segmented, single or concatenated form. Relevant portions extracted from 3GPP TS 25.331 are reproduced at Appendix B attached hereto. There it can be seen that the SI message headers carry information relevant for reconstituting a segmented SIB whose segments may be spread across multiple SI messages. Specifically, the SI header for the SI message bearing the first SIB segment inform of the number of segments in the SIB, each SI message header shows segment type (first, subsequent, last, complete), and each SI message header also gives a segment index which informs of the respective order of the segments (the UE may not receive the segmented SIBs in the proper order). In the event the end user/user equipment UE fails to receive all segments, Appendix B also reproduces how the UE is to treat those segments it has received.

3GPP TS 36.331 v8.2.0 (2008-05) is the E-UTRA Radio Resource Control specification. There, the system information message is described simply as an envelope structure to concatenate SIBs which have a common repetition rate. In its most simple form no additional information would be carried in the SI header-the present SI structure defines however that including size and SIB-Type is for further study, which is taken to mean that in LTE the SI message cannot be used for segmenting.

What is needed in the art is also a way to deal with the large-size ETWS in view of the lower bandwidth broadcast channels of E-UTRAN shown at Appendix A. Such a solution need not be limited to ETWS as will be detailed below.

### BRIEF DESCRIPTION OF THE DRAWINGS:

In the attached Drawing Figures:

Figure 1 shows a simplified block diagram of various electronic devices that are suitable for use in practicing the exemplary embodiments of this invention.

Figures 2, 3 and 4 are each a logic flow diagram descriptive of a method, and the operation of a computer program, in accordance with the exemplary embodiments of this invention.

Figure 5 is a signaling diagram showing how an SIB in segmented form can be sent using a special segmenting SIB according to a particular exemplary embodiment of the invention.

Figures 6 and 7 are each a logic flow diagram descriptive of further methods, and the operation of further computer programs, in accordance with the exemplary embodiments of this invention.

### SUMMARY:

In accordance with an exemplary aspect of the invention there is provided a method that includes generating information indicative of a segmentation state of at least one message that comprises system information, and transmitting the information indicative of the segmentation state to a user equipment, where the information indicative of the segmentation state is provided in one of a L1/L2 control channel, in a broadcast channel, or in a radio resource control message header.

In accordance with another exemplary aspect of the invention there is provided an apparatus that includes a processor and a transmitter. The processor is configured to generate information indicative of a segmentation state of at least one message that comprises system information. The transmitter is configured to transmit the information indicative of the segmentation state to a user equipment, where the information indicative of the segmentation state is provided in one of a L1/L2 control channel, in a broadcast channel, or in a radio resource control message header.

In accordance with another exemplary aspect of the invention there is provided an apparatus that includes processing means (e.g., a digital processor) and transmit means (e.g., a transmitter of a transceiver). The processing means is for generating information indicative of a segmentation state of at least one message that comprises system information. The transmit means is for transmitting the information indicative of the segmentation state to a user equipment, where the information indicative of the segmentation state is provided in one of a L1/L2 control channel, in a broadcast channel, or in a radio resource control message header.

In accordance with another exemplary aspect of the invention there is provided a method that includes selectively segmenting or not segmenting a message that comprises system information, and when the message is segmented, transmitting an indication of physical resource re-use for sending segments of the message that comprises the system information to a user equipment by one of indicating implicitly or explicitly that a resource allocation for a current segment is re-used for subsequent segments, or by assuming that temporal scheduling of the different segments is known a priori by the user equipment.

In accordance with another exemplary aspect of the invention there is provided an apparatus that includes a processor and a transmitter. The processor is configured to selectively segment or not segment a message that comprises system information. The transmitter is configured to transmit, when the message is segmented, an indication of physical resource re-use for sending segments of the message that comprises the system information to a user equipment by one of indicating implicitly or explicitly that a resource allocation for a current segment is re-used for subsequent segments, or by assuming that temporal scheduling of the different segments is known a priori by the user equipment.

In accordance with another exemplary aspect of the invention there is provided an apparatus that includes processing means (e.g., a digital processor) and transmit means (e.g., a transmitter of a transceiver). The processing means is for selectively segmenting or not segmenting a message that comprises system information. The transmit means is for transmitting, when the message is segmented, an indication of physical resource re-use for sending segments of the message that comprises the system information to a user equipment by one of indicating implicitly or explicitly that a resource allocation for a current segment is re-used for subsequent segments, or by assuming that temporal scheduling of the different segments is known a priori by the user equipment.

In accordance with another exemplary aspect of the invention there is provided a method that includes selectively segmenting or not segmenting a message that comprises system information, and when the message is segmented, transmitting an indication of a temporal distribution of segments of the message to a user equipment by one of by one of using at least one bit in L1/L2 control signaling when a resource allocation for the message is made, or by providing segment transmission time difference information in a scheduling block.

In accordance with another exemplary aspect of the invention there is provided an apparatus that includes a processor and a transmitter. The processor is configured to selectively segment or not segment a message that comprises system information. The transmitter is configured to transmit, when the message is segmented, an indication of a temporal distribution of segments of the message to a user equipment by one of by one of using at least one bit in L1/L2 control signaling when a resource allocation for the message is made, or by providing segment transmission time difference information in a scheduling block.

In accordance with another exemplary aspect of the invention there is provided a method that includes selectively segmenting or not segmenting a message that comprises system information, where segmenting is into K segments and K is an integer greater than one. For the case of segmenting, the method includes selecting from a predetermined set of system information message types a message type that is defined to have a header field with information for segmenting, sending in a first message an indication of the number K of segments, and sending in serially spaced messages on a shared channel a series of K messages of the selected type, each *k*^{th} message comprising a *k*^{th} segment of the K segments and an indication in a header of the *k*^{th} message of length of the *k*^{th} segment, wherein *k* runs from 1 though K.

In accordance with another exemplary aspect of the invention there is provided an apparatus that includes a processor and a transmitter. The processor is configured to selectively segmenting or not segmenting a message that comprises system information, where segmenting is into K segments and K is an integer greater than one. For the case where the message is segmented the processor is further configured to select from a predetermined set of system information message types a message type that is defined to have a header field with information for segmenting. The transmitter is configured to send, when the message is segmented, in a first message an indication of the number K of segments, the transmitter further configured to send in equally spaced messages on a shared channel a series of K messages of the selected type, each *k*^{th} message including a *k*^{th} segment of the K segments and an indication in a header of the *k*^{th} message of length of the *k*^{th} segment, wherein *k* runs from 1 though K.

In accordance with another exemplary aspect of the invention there is provided a method that includes selectively segmenting or not segmenting a message that comprises system information, where segmenting is into K segments and K is an integer greater than one. For the case that the message is segmented, the method includes sending in equally spaced messages on a shared channel a series of K messages, each *k*^{th} message comprising a *k*^{th} segment of the K segments and an indication in a header of the *k*^{th} message that the *k*^{th} message comprises a segment, wherein *k* runs from 1 though K, and also sending an indication of the number of K segments in either at least one of the K messages or in a separate message.

In accordance with another exemplary aspect of the invention there is provided an apparatus that includes a processor and a transmitter. The processor is configured to selectively segment or not segment a message that comprises system information, where segmenting is into K segments and K is an integer greater than one. The transmitter is configured to send, when the message is segmented, in equally spaced messages on a shared channel a series of K messages, each *k*^{th} message comprising a *k*^{th} segment of the K segments and an indication in a header of the *k*^{th} message that the *k*^{th} message comprises a segment, wherein *k* runs from 1 though K. The transmitter is further configured to send an indication of the number of K segments in either at least one of the K messages or in a separate message.

### DETAILED DESCRIPTION:

The exemplary embodiments of this invention address the details of broadcasting system information, and scheduling and scheduling rules in E-UTRAN.

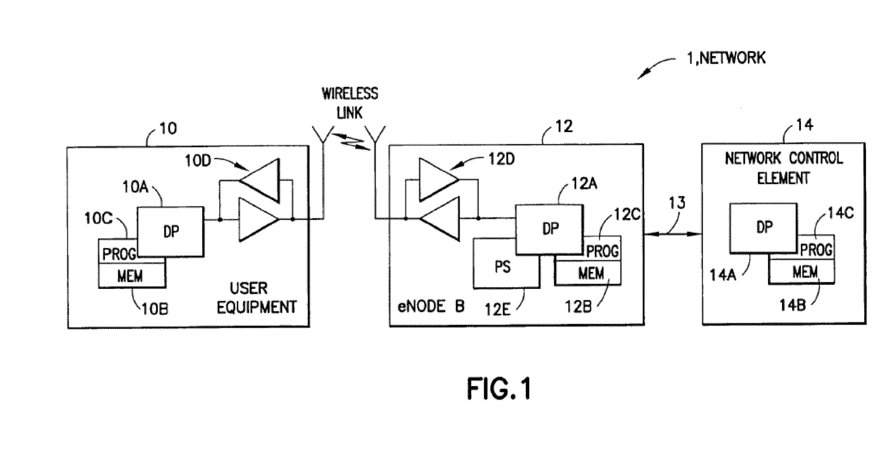

Reference is made first to Figure 1 for illustrating a simplified block diagram of various electronic devices that are suitable for use in practicing the exemplary embodiments of this invention. In Figure 1 a wireless network 1 is adapted for communication with a UE 10 via a Node B (base station) 12, also referred to herein as a eNB 12. The network 1 may include a network control element (NCE) 14. The UE 10 includes a data processor (DP) 10A, a memory (MEM) 10B that stores a program (PROG) 10C, and a suitable radio frequency (RF) transceiver 10D for bidirectional wireless communications with the Node B 12, which also includes a DP 12A, a MEM 12B that stores a PROG 12C, and a suitable RF transceiver 12D. The Node B 12 is coupled via a data path 13 to the NCE 14 that also includes a DP 14A and a MEM 14B storing an associated PROG 14C. At least one of the PROGs 10C and 12C is assumed to include program instructions that, when executed by the associated DP, enable the electronic device to operate in accordance with the exemplary embodiments of this invention, as will be discussed below in greater detail.

The eNB 12 is assumed to include a scheduling function or block, such as a PS 12E, that is constructed and operated in accordance with the exemplary embodiments of this invention, as described in detail below, to provide the UE 10 with indications of scheduling unit and scheduling unit segment resource allocations.

That is, the exemplary embodiments of this invention may be implemented at least in part by computer software executable by the DP 10A of the UE 10 and by the DP 12A of the Node B 12, or by hardware, or by a combination of software and hardware.

In general, the various embodiments of the UE 10 can include, but are not limited to, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The MEMs 10B, 12B and 14B may be of any type suitable to the local technical environment and may be implemented using any suitable data storage technology, such as semiconductor-based memory devices, flash memory, magnetic memory devices and systems, optical memory devices and systems, fixed memory and removable memory. The DPs 10A, 12A and 14A may be of any type suitable to the local technical environment, and may include one or more of general purpose computers, special purpose computers, microprocessors, digital signal processors (DSPs) and processors based on a multi-core processor architecture, as non-limiting examples.

The exemplary embodiments of this invention provide a number of improvements to the currently proposed E-UTRAN wireless communication system.

A first embodiment provides a technique for the UE 10 to determine whether a SU, such as but not limited to SU-1, is segmented or is not segmented, Further in this regard the SU segmentation state (segmented/not segmented) may be indicated in the L1/L2 control channel (PDCCH). This is possible as it is assumed that the allocation information needed for BCH distribution is less than that needed for the scheduling of 'normal' data (anything other than the BCH). In this case those bits that are unused may be used for signaling other information. Some of this information can include an indication of the segmentation state of the SU (such as SU-1).

Further in accordance with this first embodiment, the indication of whether SU-1 is segmented may be given in the P-BCH (for example, by the use of one bit). Alternatively, the RRC header may be used to indicate the segmentation state (the segmentation information is SU-specific).

More specifically, the indication of whether the SU is segmented may be accomplished by using several mechanisms. For example, one or more bits used in L1/L2 control signaling can be employed when the allocation for segmented SU is given. As another example, detailed segmentation information for any SU (other than SU-1) can be provided in the Scheduling Block (which may be in SU-1). As another example, the RRC header can be used to indicate segmentation information of the SU (not the SIB).

One exemplary advantage that is realized by the use of this embodiment, where one or more bits used in L1/L2 control signaling are employed when the allocation for the segmented SU is given, is that it is a general in nature (no difference between SU-1 and other SUs). The segmentation information may contain, as non-limiting examples, a segment indication (explicitly or implicitly), and a number of segments, as well as possibly an 'end' segment indication and/or a 'first', 'middle', and/or 'end' segment indication.

The use of this embodiment has the advantage of not requiring segmentation information in the L1/L2 control signaling. Instead, the segmentation information and the details thereof are provided in SU-1. The actual segmentation information may be the same as that discussed above in relation to the first embodiment.

A second embodiment of this invention is related to the actual allocation of the SU. For this embodiment normal scheduling through the PDCCH using the BCH-RNTI is assumed for convenience. If the SU is segmented this implies that the network (the eNB 12) needs to schedule the SU in at least two instances of the PDCCH. While this may be beneficial from the Packet Scheduler (PS 12E) point of view it also increases the amount of overhead needed for distributing the system information. To overcome this problem this embodiment provides a means to indicate allocation re-use. As a result, the SU can be scheduled freely by the network, as well as can the scheduling of segments by one time allocations. In this embodiment the network may re-use the allocation from the first segment of the SU for a following segment of the SU, thereby reducing the signaling overhead on the PDCCH.

The indication of the actual resource allocation of the different segments of the SU may be performed by re-using the same allocation as for the first segment of the SU, and can be implemented in various ways.

For example, the resource allocation for the current segment may indicate that the following segment re-uses the physical resource allocation. This can be done simply by the use of a 're-use' indication or a 'repeat' indication in the allocation of the current segment (both indications may be implemented with a single signaling bit). Further in this regard a simplification may be made such that if the resource allocation for the first segment indicates re-use or repeat, then this is interpreted by the UE 10 to mean that all segments of the SU use the same resource allocation.

In a further (third) embodiment an approach somewhat similar as that used for semi-persistent allocations for other data scheduling may be used. That is, the allocation is given for, as an example, the first segment of the SU. The actual scheduling in time, as in the third embodiment discussed below, of the different segments is assumed to be known a *priori* by the UE 10. The UE 10 then at each possible scheduling instance of each SU segment receives the PDCCH to check for the BCH-RNTI allocation. If present the allocation is be used, but if no BCH-RNTI resource allocation is present in that instance of the PDCCH the UE 10 by default re-uses the former resource allocation given for the earlier segment of the same SU.

One advantage of this approach is that there is a saving in the PDCCH for BCH resource allocation. However, it may become more difficult to read segmented SUs out of segmentation order. However, this can be accommodated by using pre-defined scheduling indicated in, for example, SU-1. In this case the scheduling information block (e.g., SU-1) includes relevant information needed by the UE 10 for decoding the system information (SUs).

In this case the provided information may be all or just a part of the needed information. For example, in one exemplary case the SU-1 indicates by using the SFN mod x = y, where the first segment of the SU is placed, as well as indicating whether it is segmented or is not segmented. The number of segmentations, whether the allocation repeat is used or is not used, and/or whether time distribution is used or is not used may also be indicated. The PDCCH of the first segment then indicates the actual physical resource block on the DL-SCH where the first segment of the SU can be found.

The SU-1 may, in addition to the foregoing information, also include the actual physical resource blocks on the DL-SCH used for the SU transmission.

The use of this embodiment implies that there would not be a need to use the PDCCH (BCH-RNTI) overhead for broadcast information, except for the distribution of the broadcast message containing this scheduling information (e.g. SU-1).

A further (fourth) embodiment of this invention is related to the segmentation 'distance' in time. In this embodiment the scheduling information for SUs also includes the possibility to indicate the time distance between segmented SUs. This can be beneficial for infrequently scheduled SUs (which may be large), as the eNB 12 can distribute the segments over time thereby conserving resources for the scheduling of other data.

In this further embodiment the distribution in time of the different segments of the SU may be given in a very similar manner as for indicating the segmentation of a SU. As such, this may be accomplished by using one or more bits in L1/L2 control signaling when the allocation for the SU is given, or by providing detailed time difference information in the scheduling block. An advantage of the first approach is that it is a general (i.e., no difference between SU-1 and any other SU) technique of indicating the time difference between segments.

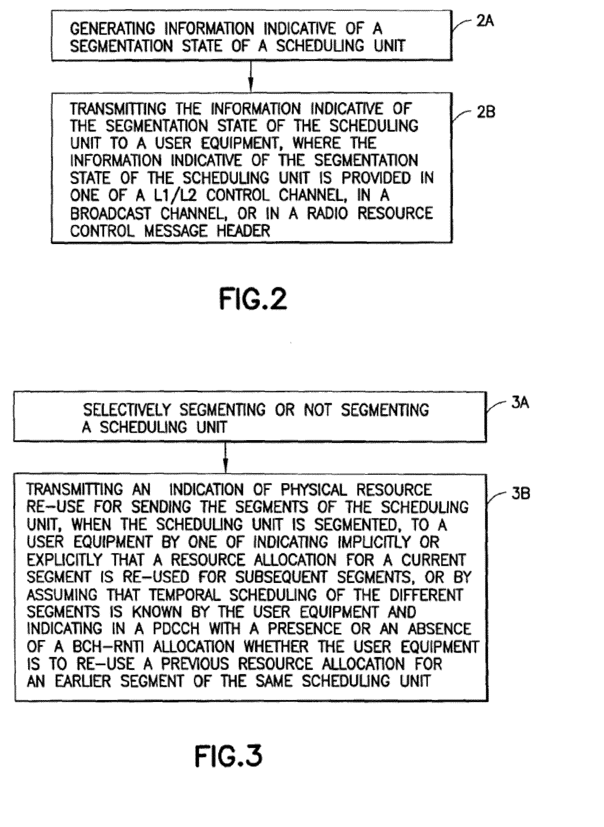

Based on the foregoing description it should be apparent that the exemplary embodiments of this invention provide a method, apparatus and computer program to indicate to a user equipment whether a scheduling unit is segmented. Referring to Figure 2, the method, and the operation of the computer program, includes (2A) generating information indicative of a segmentation state of the scheduling unit; and (2B) transmitting the information indicative of the segmentation state of the scheduling unit to the user equipment, where the information indicative of the segmentation state of the scheduling unit is provided in one of a L1/L2 control channel, in a broadcast channel, or in a radio resource control message header.

The method, apparatus and computer program product of the preceding paragraph, where the information comprises at least one of a explicit or implicit segment indication, a number of segments, and/or at least one of 'first', 'middle' and 'end' segment indication.

The method, apparatus and computer program product of the preceding paragraphs, where the scheduling unit is SU-1.

The method, apparatus and computer program product of the preceding paragraphs, where generating and transmitting occur at an eNB.

Based on the foregoing description it should be further apparent that the exemplary embodiments of this invention provide a method, apparatus and computer program to indicate to a user equipment a resource allocation of a scheduling unit. Referring to Figure 3, the method, and the operation of the computer program, includes (3A) selectively segmenting or not segmenting a scheduling unit; and (3B) transmitting an indication of physical resource re-use for sending the segments of the scheduling unit, when the scheduling unit is segmented, to the user equipment by one of indicating implicitly or explicitly that a resource allocation for a current segment is re-used for subsequent segments, or by assuming that temporal scheduling of the different segments is known a *priori* by the user equipment and indicating in a PDCCH with a presence or an absence of a BCH-RNTI allocation whether the user equipment is to re-use a previous resource allocation for an earlier segment of the same scheduling unit.

The method, apparatus and computer program product of the preceding paragraph, where SU-1 indicates by using SFN mod x = y, where the first segment of the scheduling unit is located, and whether the scheduling unit is segmented.

The method, apparatus and computer program product of the preceding paragraph, where the SU-1 also includes an indication of actual physical resource blocks on a DL-SCH used for the scheduling unit transmission.

The method, apparatus and computer program product of the preceding paragraphs, where selectively segmenting and transmitting occur at an eNB.

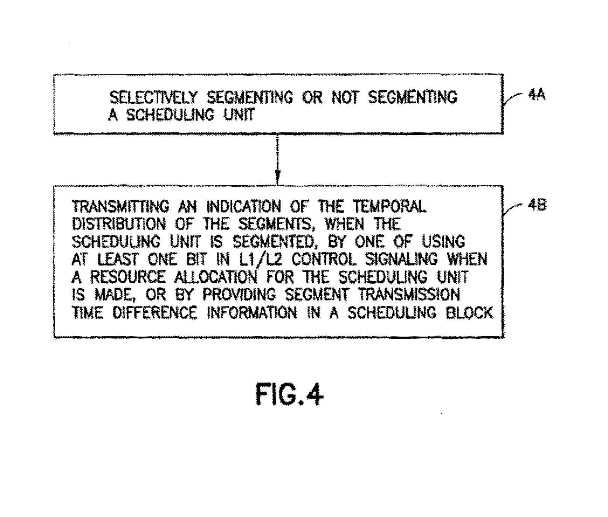

Based on the foregoing description it should also be apparent that the exemplary embodiments of this invention provide a method, apparatus and computer program to indicate to a user equipment a temporal distribution of segments of a scheduling unit. Referring to Figure 4, the method, and the operation of the computer program, includes (4A) selectively segmenting or not segmenting a scheduling unit; and (4B) transmitting an indication of the temporal distribution of the segments, when the scheduling unit is segmented, by one of using at least one bit in L1/L2 control signaling when a resource allocation for the scheduling unit is made, or by providing segment transmission time difference information in a scheduling block.

The method, apparatus and computer program product of the preceding paragraphs, where selectively segmenting and transmitting occur at an eNB.

The various blocks shown in Figures 2, 3 and 4 may be viewed as method steps, and/or as operations that result from operation of computer program code, and/or as a plurality of coupled logic circuit elements constructed to carry out the associated function(s).

It should be further appreciated that the exemplary embodiments of this invention pertain as well to the UE 10 that is constructed and operated so as to receive and correctly interpret the various SU-related signaling events sent from the UE 12.

Now are described more particularized solutions to solve the problem of ETWS (or other) information blocks that are too large for the low bandwidth broadcast channels of Appendix A. The exemplary embodiments of these aspects of the invention address with particularity how a SIB may be segmented, and the various exemplary embodiments are directed to segmentation of SIBs that may be implemented within the framework of E-UTRAN (assuming that RAN2 will allow segmentation in E-UTRAN to go forward at least for ETWS). The following teachings are supplemental to those above, which are also readily adaptable to segmenting the SIBs for use with ETWS for example.

It is noted that the examples and explanations below are in the context of a LTE network, but embodiments of this invention are not so limited and may be employed in any network protocol, such as for example UTRAN, GSM, and the like, in which segmentation of an SIB might be used. Further, the various names used in the description below (e.g., SI, format names, filed names, etc.) are not intended to be limiting in any respect but rather serve as particularized examples directed to specific LTE implementations. These terms/names may be later changed in LTE and they may be referred to by other terms/names in different network protocols, and these teachings are readily adapted and extended to such other protocols.

Below are provided a number of improvements to the currently proposed E-UTRAN wireless communication system and which particularly enable implementation of ETWS in E-UTRAN. As above, the segmenting aspects of these teachings are not limited to ETWS but may also be used for other SIBs such as for example whenever the broadcast channel is narrow/low bandwidth. Three further exemplary embodiments particularly adapted to this issue are detailed below.

In a fifth embodiment of the invention there is a special container type system information block SIB, that is different from the normal SIBs but which is used side by side with the special container type. That is, the special container is in addition to the normal non-segmented SIBs now agreed for E-UTRAN among the RAN2 group. This special container type SIB enables longer SIBs to be transmitted, via segmentation. This special container SIB is preferably transmitted in segments via SI messages in consecutive TTIs on the DL-SCH, and these SI messages have no other SIBs (e.g., no concatenated SIBs with it in the same SI message). In one aspect the LTE SI message structure is extended to include a header structure with elements that enable reconstitution of the different segments by the receiving UE. This differs from the UTRAN implementation in several resects noted below. Were the header structure identical or closely so to that of UTRAN, no special container or special segmented SIB would be required since in UTRAN any SI message can have a segmented SI and the SI message headers carry all the information needed for reconstituting the segmented SIBS. In this fifth embodiment, not all of the information necessary for the UE to reconstitute the segmented SIB is within the SI message headers, and as will be seen in the example below those headers lack information about the number of segments there are in the segmented SIB.

The following ASN.1 (abstract syntax notation one) description shows one exemplary structure of the container SIB. All used fields have been defined in type definitions. In this example the container SIB has been allocated the name SystemInformationBlockType9. Note that this type is reserved for segmented SIBs; other types of SI messages sent on the BCCH are not allowed to be segmented.

| SystemInformationBlockType9 ::= | | | SEQUENCE { |
|---|---|---|---|
| | | *Transaction-ID* | INTEGER (0..3), |
| | | *sib-type* | SIB-Type, |
| | | *segment-type* | Segment-Type, |
| | | *sib-segment* | OCTET STRING, -- includes length |
| | | | ... } |
| | Segment-Type | | ENUMERATED {*First-Segment, Subsequent-Segment, Last-Segment, reserved1*} |
| | SIB-Type::= | | ENUMERATED {*sib Type2, sib Type3, sib Type4, sib Type5, sib Type6, sib Type7, sibType8, sib Type9,spare8, spare7, spare6, spare5,* spare4, *spare3, spare2, spare1*} |

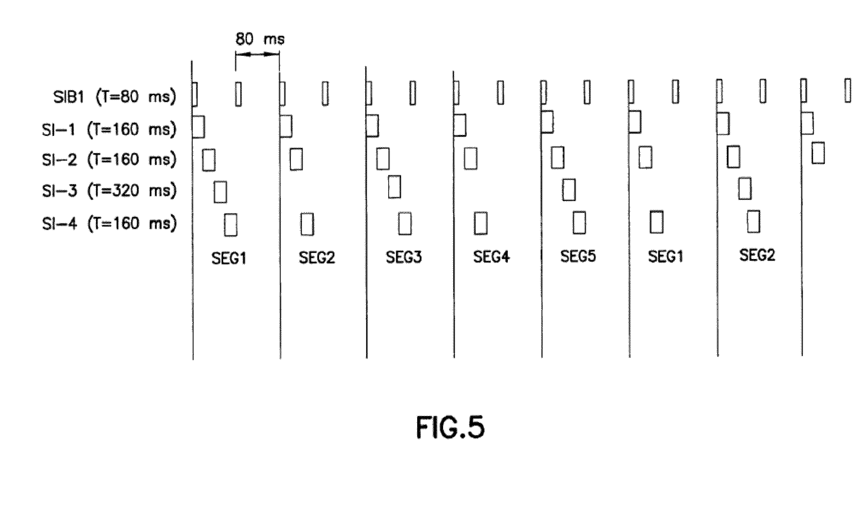

The terms "First-Segment", Subsequent-Segment" and "Last-Segment" differ in terminology but not in substance from the "first", "middle" and "end" segments noted above with respect to the first through fourth embodiments. Any large SIB that requires transmission on DL-SCH is split into segments which become type9 SIBs. The type9 SIBs have a header such as that shown above with the four fields (more may be added) *Transaction-ID, sib-type, segment-type,* and *sib-segment.* The *sib-type* field tells this is a type9 SIB, and only where it is sibType9 are the *segment-type* and *sib-segment* fields used since only the sibType9 container can be segmented. The size of these segmented SIBs can be decided by the eNB scheduler, and is given in the *sib-segment* field as above. Note that unlike UTRAN, there is no count of how many segments there are to the SIB in the header fields. Instead, the total count of the segments could be sent in a separate SI Information element IE, for example in a "SchedulingInformation IE" in a SIB1 message which is a different SI message than the one carrying the SIB segments (see Figure 5). Note also that unlike UTRAN, no other SIBs are allowed to be concatenated to the SIB in the container. This is not stated in the header example above, but is known to the eNB and UEs such as from a published standard and so need not be explicitly signaled.

The *Transaction-ID* field in the above example is used to denote parallel SIB container sessions if such parallel sessions are needed, so that the receiving UE can distinguish which segments go to which of the parallel sessions.

Using this fifth aspect of the invention, to implement ETWS transmission in the case of using a container SIB there is need to define a new dedicated SIB for ETWS message. As noted in background above and with reference to Appendix A, in some bandwidths it is possible to send the ETWS messages without segmenting, and so a container SIB would not always be necessary for ETWS, but the UE radio resource control RRC does not need to know this; if it receives a container SIB/type9, then the UE knows it is segmented. If instead the UE receives a different ETWS in a different type SIB (other than type9), then that different ETWS will not be segmented because this container SIB/type9 is reserved for segmented SIBs. Similarly, an eNB having a low bandwidth DL-SCH can use the container/type9 SIB for other SIBs apart from ETWS, and may even avoid in some instances having to use a very high coding rate that would otherwise be necessary to fit the SIB into a single SI message, absent the segmentation option that the container SIB offers.

Note that the ETWS SIB is visible in the scheduling block only during the time this special information is sent (in an embodiment the ETWS transmission start is indicated with a special bit in the paging message sent on the paging channel PCH), as this SIB only occurs for a short time. For other SIBs which may be carried in segmented form, only the repetition rate need be indicated, which may be done in the scheduling block as normally. The UE RRC would just need to receive all container SIBs and assume that SIBs not found otherwise are contained in them.

This fifth embodiment is seen to keep the SI structures simple as it is presently in E-UTRAN, while adding complexity only when segmenting is needed (e.g. only to UEs with ETWS capability if ETWS is the only system requiring segmenting). This minor complexity addition is seen as a reasonable tradeoff in order to enable ETWS.

Figure 5 illustrates an example of how ETWS may be sent through a container SIB Type9 according to the fifth embodiment of the invention. All channels in Figure 5 are DL-SCH. The SIB1 message repeats at 80 ms intervals and carries scheduling information such as for the scheduling units on the DL-SCH. Other messages SI-1, SI-2 and SI-3 have different repeat rates and are not used in this example for the ETWS message. The SI-4 message contains the SI messages (SIB9's) that each bear one segment of the ETWS message/SIB. Each SIB9 transmission is spaced from a consecutive SIB9 transmission by the indicated 160 ms repetition rate, but the different SIB9 messages are different from one another as the segment contents are not identical. The UE knows where the first transmission is by checking the ETWS repetition rate, which in the example of Figure 2 is 5*160ms. The UE knows there are a total of five SIB segments for the ETWS from the SIB1 message.

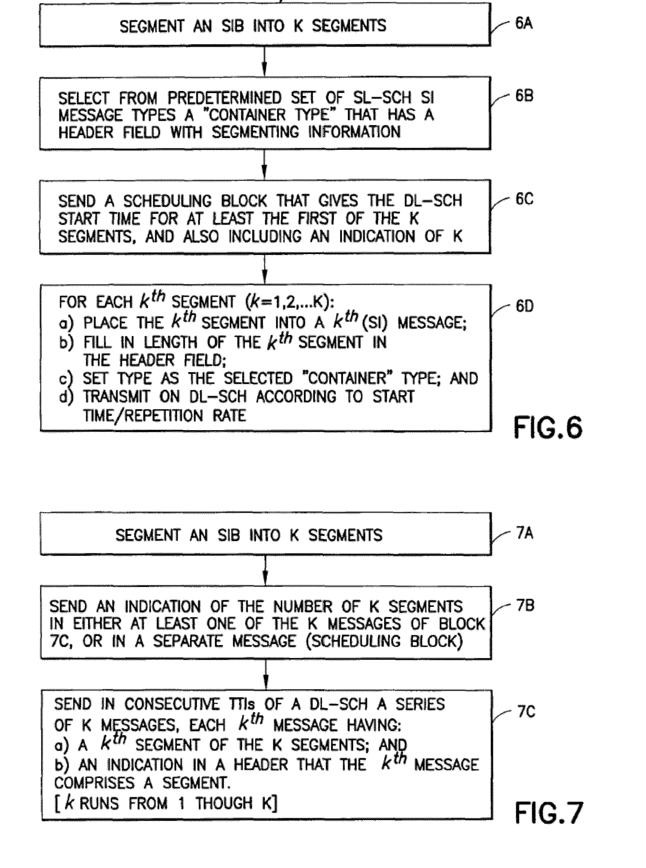

Figure 6 is a process flow diagram illustrating exemplary process steps according to the sixth embodiment of the invention detailed above and at Figure 5. At block 6A of Figure 3 the eNB segments an information block into a number K of segments where K is an integer greater than one. At block 6B the eNB selects a container type from a predetermined set of system information message types, where the container type is defined to have a headerfield with information for segmenting and at least one other type within the set does not allow for segmenting. At block 6C the eNB sends in a first message (e.g., SIB1) an indication of the number K of segments. Block 6D may be considered as a loop run on each of the *k*=1, 2, ...K segments separately. For each *k*^{th} segment, the eNB places that *k*^{th} segment into a *k*^{th} (SI) message, fills in the header fields that comprise at least length of the *k*^{th} segment that is in that same *k*^{th} message, sets type as the selected container type, and sends the *k*^{th} message over a shared channel (DL-SCH). This sending is repeated for all of the remaining K-1 segments in turn.

For the case where the header also includes a field for segment type, then a) the *k*=1 message that bears the *k*=1 segment includes an indicator at that segment type field for "first segment" or "start", b) each of the k=2 through (K-1)^{th} messages that bears the respective *k*=2 through K-1 segment includes an indicator at that segment type field for "subsequent segment" or "middle", and c) the *k*=K^{th} message that bears the single remaining k=K segment includes an indicator at that segment type field for "last segment" or "last".

The UE receives in a first message the indication of the number of segments and from the indication determines that there are K segments. The UE then receives in turn each of the K segments in separate ones of the K messages following the first message, It knows where the *k*=1 message will be from the scheduling block in which the indicator for K is received, and it knows where the remaining K-1 SI messages will be from the repetition rate on the DL-SCH.

In a sixth embodiment of the invention, which is alternative to the fifth one detailed above, there is provided a SIB with a segmentation field. Rather than a special container SIB, in this embodiment there is a segmentation field in the SIB that requires segmentation (e.g. with above mentioned fields: first-segment, subsequent-segment, last-segment,...). Unlike the container SIB, in E-UTRAN this SIB does not have a variable length. The segmentation field is not included in normal SIBs that are sent fully within a single SI message. If the UE receives this type of SIB that does have the segmentation field it would know that it is required to read multiple instances of the same SIB until it reaches the total count of the segments. Information of the total count of number of segments for a segmented SIB is given to the UE in a separate IE, such as in SIB scheduling information. Alternatively the count information can come in the header of the SIB. In the example header below is shown the segmentation field and also the segment count information, and while it is entitled SIB Type9 that is not to imply that it is a container-type SIB as was the fifth embodiment. An exemplary header according to this sixth embodiment is:

| SystemInformationBlockType9 ::= | | | SEQUENCE { |
|---|---|---|---|
| | | segment-Type | Segment-Type, |
| | | numberOfSegments | INTEGER(1..9) -COND if Segment-Type equals to first-segment |
| | NORMAL_INFORMATION_ELEMENTS_OF_SIB...} | | |

As each of the segments need to be sent in separate SI messages and not cause the L1 physical layer to decode segmentation information (ASN.1 is not normally decoded by L1), preferably the "NumberOfSegment" information would come in the DL-SCH scheduling block rather than in the header (on the DL-SCH) as shown in the above example. The number-of-segment information in the scheduling block would then implicitly indicate the number of SI messages on the DL-SCH that are used to convey the segmented SIB.

Like the fifth embodiment, this sixth embodiment is seen to keep the SI structures simple as they presently are in E-UTRAN, and to add complexity only to any special SIB which is sent in a segmented format. But as noted above, some complexity is necessary to enable segmentation support so as to enable ETWS at the lower coding rates. The segmenting header IE needs to be used always for the segmented SIB even when there is no segmenting required with higher BW's, which as will be seen below is not necessary always for the seventh embodiment below.

The seventh embodiment of the invention is a variant of the sixth, but there is provided an SIB with an optional segmentation field. This optional header field is defined so it may be used in any SIB that could potentially need segmenting. This differs from the sixth embodiment above in that the UE may expect any SIB to be segmented. This seventh embodiment would thus require one bit extra added to any SIB that could potentially be segmented, to indicate whether in that instance it is or is or segmented. This would not need to be added to every SIB, but for example can be added only to those sent in low bandwidth cases. Following is an example header according to this seventh embodiment:

| SystemInformationBlockTypeN ::= | | | SEQUENCE { |
|---|---|---|---|
| | | segment-Type | Segment-Type OPTIONAL, |
| | | numberOfSegments | INTEGER(1..9) -COND if Segment-Type equals to first-segment |
| | NORMAL_INFORMATION_ELEMENTS_OF_SIB...} | | |

As with the sixth embodiment, each of the segments needs to be sent in separate SI message and not cause L1 to decode the segmentation information (ASN.1 is not normally decoded by L1), preferably the NumberOfSegment information would come in the scheduling block. This information would then implicitly indicate number of SI messages that are used to convey the segmented SIB.

This seventh embodiment also keeps the SI structures as presently agreed in E-UTRAN and adds complexity only to any special SIB which is sent in segmented format, but this is required if ETWS is to be enabled as presently understood. As compared to the sixth embodiment above, the segmenting header is not needed when the subframe size allows the eNB to send the SIB without segmenting.

The sixth and seventh embodiments are detailed at Figure 7. At block 7A the eNB decides to segment an SIB into segments (K generically represents the number of segments). The eNB sends at block 7B an indication of K, the number of segments, in either one (or more) of the K messages that carry the segments or more preferably in a separate message such as the scheduling block that schedules at least one of the K messages. At block 7C the eNB sends the series of K messages, each *k*^{th} SI message having a *k*^{th} segment and a header than indicates that the *k*^{th} SI message has a segment in it. This can be a single bit (segmented/not segmented) in which case the header may be included in all SI message types, or it may be specific to the message type that the eNB selects to send the segment in and not present in other message types.

While a length field may be present in this header, it can be avoided by having the segmentation done into equal length segments, as near as possible. So ideally all K segments are of equal length and more practically there are K-1 segments of equal length, where the last segment has whatever remains of the overall SIB.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the inventions may be practiced in various components such as integrated circuit chips and modules. The design of integrated circuits is by and large a highly automated process. Complex and powerful software tools are available for converting a logic level design into a semiconductor circuit design ready to be fabricated on a semiconductor substrate. Such software tools can automatically route conductors and locate components on a semiconductor substrate using well established rules of design, as well as libraries of pre-stored design modules. Once the design for a semiconductor circuit has been completed, the resultant design, in a standardized electronic format (e.g., Opus, GDSII, or the like) may be transmitted to a semiconductor fabrication facility for fabrication as one or more integrated circuit devices.

Various modifications and adaptations to the foregoing exemplary embodiments of this invention may become apparent to those skilled in the relevant arts in view of the foregoing description, when read in conjunction with the accompanying drawings. However, any and all modifications will still fall within the scope of the non-limiting and exemplary embodiments of this invention.

For example, while the exemplary embodiments have been described above in the context of the E-UTRAN (UTRAN-LTE) system, it should be appreciated that the exemplary embodiments of this invention are not limited for use with only this one particular type of wireless communication system, and that they may be used to advantage in other wireless communication systems. Further, the exemplary embodiments of this invention are not to be assumed to be limited for use with only the various DL channels and channel names that were expressly described above.

Furthermore, some of the features of the various non-limiting and exemplary embodiments of this invention may be used to advantage without the corresponding use of other features. For example, and as was made apparent above, the second embodiment that relates to the signaling of the resource allocation of the SU, and the possible of re-use of a previous resource allocation for one or more subsequent segments, may make use of the third embodiment as it relates to the segmentation distance in time. As such, the foregoing description should be considered as merely illustrative of the principles, teachings and exemplary embodiments of this invention, and not in limitation thereof.

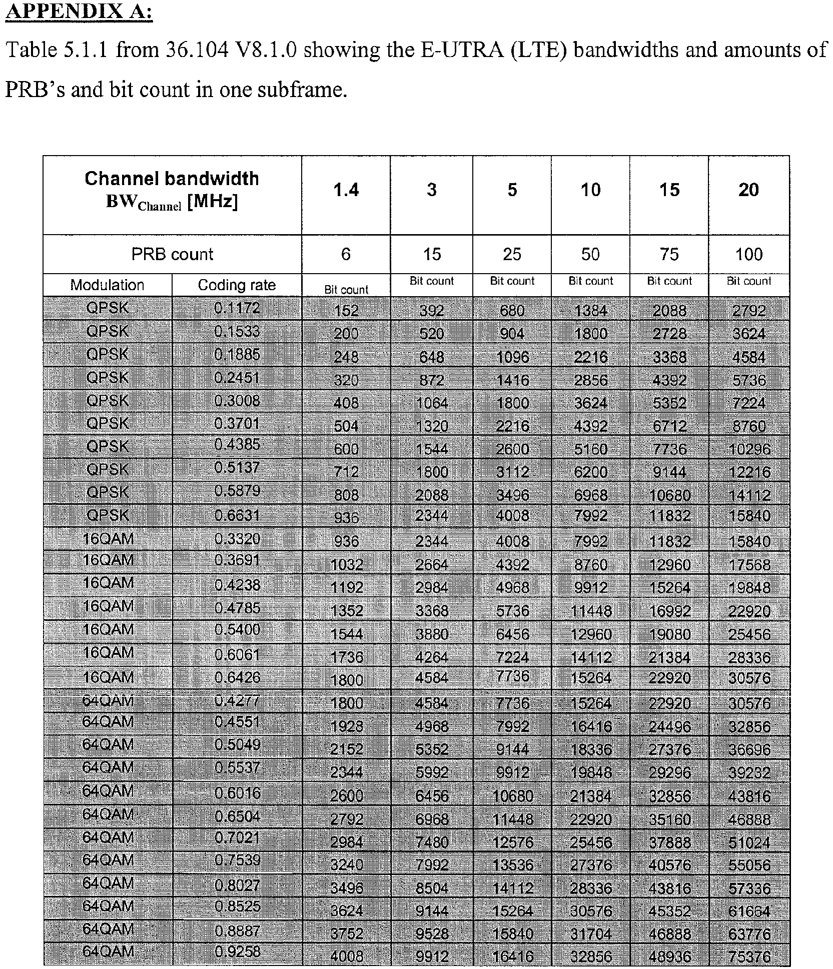

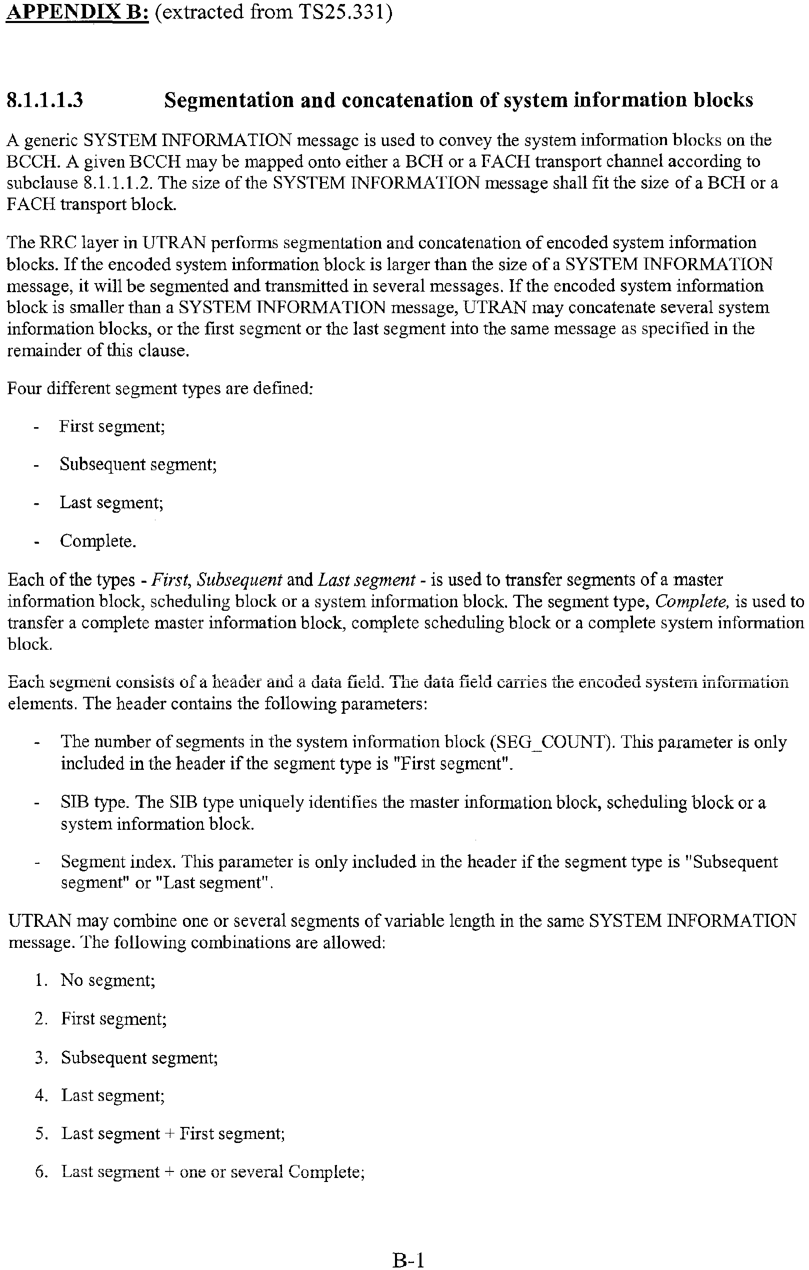

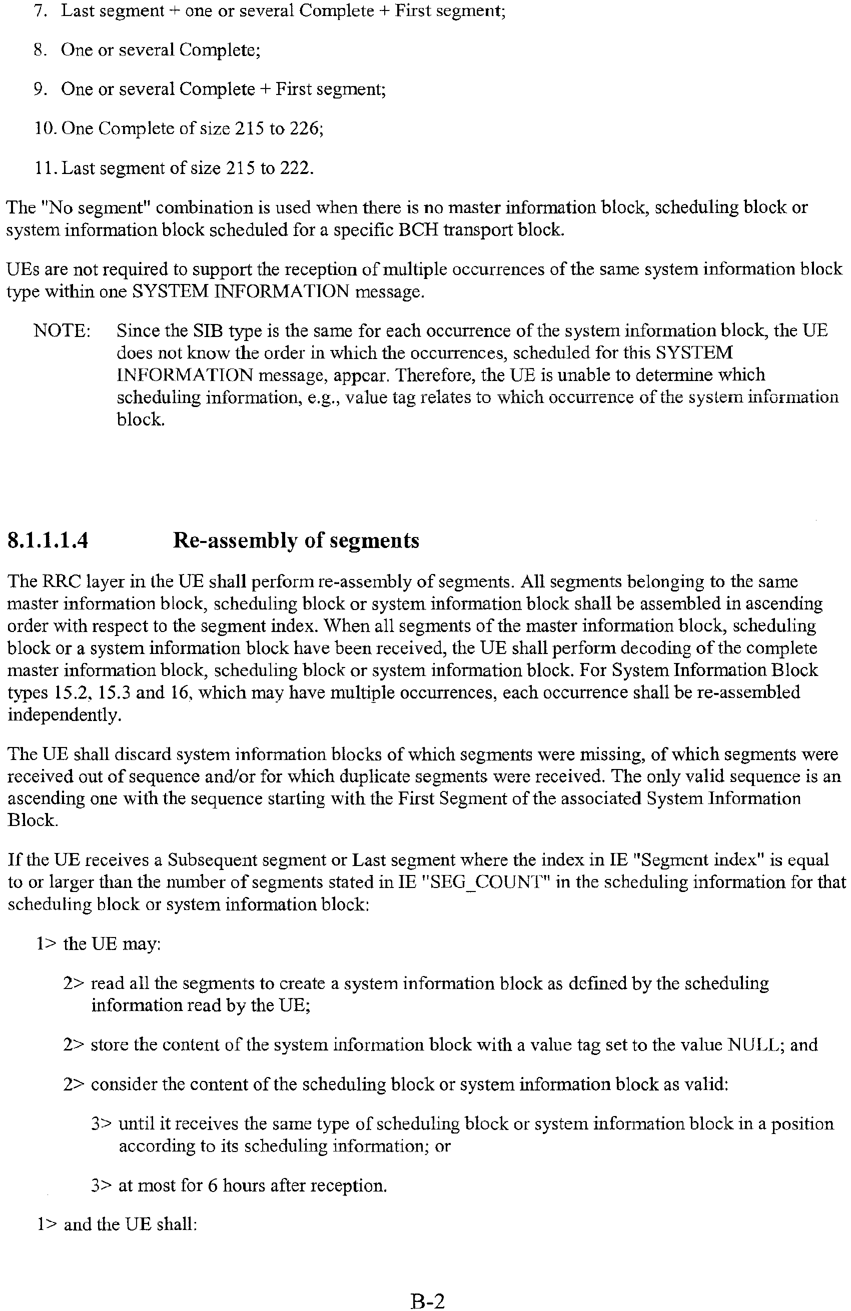

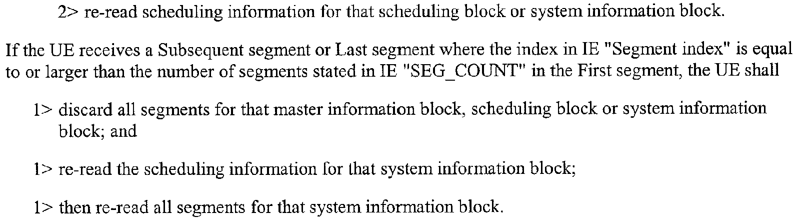

## Claims

1. A method comprising:
selectively segmenting or not segmenting a message that comprises system information, where segmenting is into K segments and K is an integer greater than one;
for the case of segmenting, selecting from a predetermined set of system information message types a message type that is defined to have a header field with information for segmenting;
sending in a first message an indication of the number K of segments; and
sending in serially spaced messages on a shared channel a series of K messages of the selected type, each *k*^{th} message comprising a *k*^{th} segment of the K segments and an indication in a header of the *k*^{th} message of length of the *k*^{th} segment, wherein *k* runs from 1 though K.

2. The method of claim 1, wherein the first message further indicates at least a start time for one of the K messages, and the serially spaced messages are equally spaced in consecutive transmission time intervals.

3. The method of claim 1, wherein none of the *k*^{th} segments are concatenated with other system information within the *k*^{th} message in which the *k*^{th} segment is disposed, and wherein at least one other type within the set does not allow for segmenting.

4. The method of claim 1, wherein each of the headers of the K messages further include an indicator selected from the set "first-segment", "subsequent-segment" and "last-segment".

5. An apparatus comprising:
a processor configured to selectively segmenting or not segmenting a message that comprises system information, where segmenting is into K segments and K is an integer greater than one, and when the message is segmented the processor is further configured to select from a predetermined set of system information message types a message type that is defined to have a header field with information for segmenting; and
a transmitter configured to send, when the message is segmented, in a first message an indication of the number K of segments, the transmitter further configured to send in equally spaced messages on a shared channel a series of K messages of the selected type, each *k*^{th} message comprising a *k*^{th} segment of the K segments and an indication in a header of the *k*^{th} message of length of the *k*^{th} segment, wherein *k* runs from 1 though K.

6. The apparatus of claim 5, wherein the first message further indicates at least a start time for one of the K messages, and the serially spaced messages are equally spaced in consecutive transmission time intervals.

7. The apparatus of claim 5, wherein none of the *k*^{th} segments are concatenated with other system information within the *k*^{th} message in which the *k*^{th} segment is disposed; and wherein at least one other type within the set does not allow for segmenting.

8. The apparatus of claim 5, wherein each of the headers of the K messages further include an indicator selected from the set "first-segment", "subsequent-segment" and "last-segment".

9. A method comprising:
selectively segmenting or not segmenting a message that comprises system information, where segmenting is into K segments and K is an integer greater than one;
when the message is segmented, sending in equally spaced messages on a shared channel a series of K messages, each *k*^{th} message comprising a *k*^{th} segment of the K segments and an indication in a header of the *k*^{th} message that the *k*^{th} message comprises a segment, wherein *k* runs from 1 though K; and
sending an indication of the number of K segments in either at least one of the K messages or in a separate message.

10. The method of claim 9, wherein at least K-1 of the K segments are of equal length.

11. The method of claim 9, wherein the indication of the number of K segments is sent in a separate message that schedules at least one of the K messages.

12. The method of claim 9, wherein for the case of not segmenting, the header which comprises a field for the indication that the message to which the header is attached comprises a segment is an optional header.

13. The method of claim 9, wherein for the case of not segmenting, the header which comprises a field for the indication that the message to which the header is attached comprises a segment comprises an indication that the message is not segmented.

14. An apparatus comprising:
a processor configured to selectively segment or not segment a message that comprises system information, where segmenting is into K segments and K is an integer greater than one; and
a transmitter configured to send, when the message is segmented, in equally spaced messages on a shared channel a series of K messages, each *k*^{th} message comprising a *k*^{th} segment of the K segments and an indication in a header of the *k*^{th} message that the *k*^{th} message comprises a segment, wherein *k* runs from 1 though K,
the transmitter further configured to send an indication of the number of K segments in either at least one of the K messages or in a separate message.

15. The apparatus of claim 14, wherein for the case of not segmenting, the header which comprises a field for the indication that the message to which the header is attached comprises a segment comprises an indication that the message is not segmented.
